# EUROPÄISCHE PATENTSCHRIFT

(11) **EP 3 132 146 B1**
(45) Veröffentlichungstag und Bekanntmachung des Hinweises auf die Patenterteilung: **27.06.2018**
(21) Anmeldenummer: 16719768.0
(22) Anmeldetag: 13.04.2016
(51) Int. Cl.: F16B 2/20, F16B 43/00, F16B 5/06

(54) **BEFESTIGUNGSVORRICHTUNG**
FASTENING DEVICE
DISPOSITIF DE FIXATION

(30) Priorität: 13.04.2015 DE 102015004515
(43) Veröffentlichungstag der Anmeldung: 22.02.2017
(73) Patentinhaber: A. Raymond et Cie, 38000 Grenoble (FR)
(72) Erfinder: SCHULZ, Stefan, 79540 Lorrach (DE); ANNA, Melanie, 79688 Hausen i.W. (DE); GEIST, Richard, Southfield, MI 48075 (US); POUZOLS Virginie, 68330 Huningue (FR)
(74) Vertreter: König Szynka Tilmann von Renesse Patentanwälte Partnerschaft mbB
(86) Internationale Anmeldenummer: PCT/EP2016/000605
(87) Internationale Veröffentlichungsnummer: WO 2016/165823

(56) Entgegenhaltungen:
- WO-A1-2012/104250
- DE-C- 53 811

## Beschreibung

Die Erfindung betrifft eine Befestigungsvorrichtung mit einem Befestiger, der einen Kopf mit einer Kopfkontaktfläche und einen sich vom Kopf aus entlang einer Längsachse erstreckenden Stift aufweist, wobei der Stift ein Befestigungsende mit einer Kontaktfläche, die Kopfkontaktfläche gegenübersteht, aufweist,

Als Befestigungsvorrichtungen sind Schrauben mit auf einen Gewindestift der Schraube aufgeschraubten Muttern bekannt, bzw. Schrauben, die in eine Gewindebohrung eingeschraubt werden. Die miteinander zu befestigenden Verbindungsteile werden zwischen dem Kopf der Schraube und der auf den Gewindestift aufgeschraubten Mutter angeordnet. Schraubverbindungen haben jedoch den Nachteil, dass sie einen relativ zeitaufwendigen Befestigungsvorgang erfordern. So muss beispielsweise eine Schraube mehrfach gedreht werden, bis diese in eine Gewindebohrung tief genug eingeschraubt ist. Bei Durchsteckschrauben ist es erforderlich, das Stiftende mit einer Mutter zu versehen und bei Stiftschrauben oft auch das andere Stiftende. Bei einer Vielzahl von Schraubverbindungen summiert sich dabei die Montagezeit enorm.

Ferner sind als gattungsgemäße Befestigungsvorrichtungen Clips bekannt. Diese weisen einen Befestiger mit einem Kopf mit einer Kopfkontaktfläche auf. Von dem Kopf aus erstreckt sich ein Stift entlang einer Längsachse. Der Stift weist ein Befestigungsende mit einer Kontaktfläche auf, die der Kopfkontaktfläche gegenüberliegt. Die mit der Befestigungsvorrichtung zu verbindenden Verbindungsteile werden zwischen der Kopfkontaktfläche und der Kontaktfläche des Stifts angeordnet, wobei der Stift in den Verbindungsteilen vorgesehene Öffnungen durchgreift. Dabei ist es vorgesehen, dass die Kontaktfläche auf einem gefederten Element des Stifts ausgebildet ist. Die Federkraft spannt das Element von der Längsachse des Stifts weg vor. Dies erlaubt es, den Stift des Befestigers durch die Öffnungen der Verbindungsteile zu führen, wobei dabei das federbelastete Element entgegen der Federkraft auf die Längsachse des Stifts hin bewegt wird und damit den Umfang des Stifts im Bereich der Kontaktfläche reduziert. Nach Durchtreten der Öffnung bewegt sich das federbelastete Element in seine Ausgangsstellung zurück und erweitert dabei den Umfang des Stifts. Dadurch wird verhindert, dass der Stift wieder durch die Öffnung gezogen werden kann. Nachteilig an einer solchen Befestigungsvorrichtung ist, dass der Abstand zwischen der Kopfkontaktfläche und der Kontaktfläche in der Ausgangsstellung des federbelasteten Elements fest vorgegeben ist und damit die auf die zu verbindenden Verbindungsteile wirkende Verbindungskraft fest vorgegeben ist.

Aus WO 2012/104250 A1 ist eine Befestigungsvorrichtung mit einem Befestiger bekannt, der einen Kopf und einen sich von dem Kopf aus entlang einer Längsachse erstreckenden Stift aufweist, wobei der Stift eine Kontaktfläche aufweist.

Aufgabe der vorliegenden Erfindung ist es daher, eine gattungsgemäße Befestigungsvorrichtung vorzuschlagen, bei der die auf die zu verbindenden Verbindungsteile ausgeübte Verbindungskraft eingestellt werden kann.

Die Aufgabe wird durch den Gegenstand des Anspruchs 1 und des Anspruchs 6 gelöst. Vorteilhafte Ausführungsformen sind in den Unteransprüchen und in der Beschreibung angegeben.

Der Kern der Erfindung sieht in einer ersten Variante der Erfindung vor, dass zwei Unterlegscheiben relativ zueinander gedreht werden, wobei mindestens eine Unterlegscheibe einen keilförmigen Teilabschnitt aufweist, über den die andere Unterlegscheibe sich bewegt und dabei den Abstand zwischen den voneinander wegweisenden Oberflächen der Unterlegscheiben erhöht und dadurch den Abstand zwischen der dem Stiftende nächsten Unterlegscheibe und der Kontaktfläche verringert. Die Verbindungsteile werden zwischen der dem Stiftende nächsten Unterlegscheibe und der Kontaktfläche angeordnet, so dass die Verringerung des Abstands zwischen dieser Unterlegscheibe und der Kontaktfläche die auf die Verbindungsteile ausgeübte Verbindungskraft erhöht.

In einer bevorzugten Ausführungsform ist es vorgesehen, dass die eine Unterlegscheibe dazu vorgesehen ist, relativ zum Befestiger um die Längsachse des Stifts gedreht zu werden, während die andere Unterlegscheibe nicht dazu vorgesehen ist, um die Längsachse des Stifts gedreht zu werden. Dabei kann die für die Relativdrehung vorgesehene Unterlegscheibe die sein, die dem Befestigungsende am nächsten ist, oder die sein, die dem Kopf am nächsten ist. Es ist alternativ auch denkbar, dass sich beide Unterlegscheiben in entgegengesetzte Rotationsrichtungen drehen. In einer bevorzugten Ausführungsform dreht sich die Unterlegscheibe, die dem Kopf am nächste ist (zweite Unterlegscheibe) und die Unterlegscheibe, die dem Stiftende am nächsten ist (erste Unterlegscheibe), dreht sich nicht.

In einer bevorzugten Ausführungsform wird das Drehmoment über die für die Relativdrehung vorgesehene Unterlegscheibe eingeleitet. Hierzu kann die zu drehende Unterlegscheibe in einer bevorzugten Ausführungsform besonders ausgebildet sein, beispielsweise einen hexagonalen Umfang aufweisen, an den ein Werkzeug angreifen kann.

In einer alternativen Ausführungsform wird das Drehmoment über den Kopf eingeleitet, so dass sich dieser und der an ihm vorgesehene Stift relativ zu der einen Unterlegscheibe dreht, während die andere Unterlegscheibe drehfest mit dem Stift verbunden ist und sich mit diesem mitdreht.

In einer bevorzugten Ausführungsform sind die Kopfkontaktfläche und die Längsachse des Stifts senkrecht zueinander ausgerichtet. Bevorzugt besteht die Kopfkontaktfläche aus mehreren Teilflächen, die besonders bevorzugt in einer Ebene liegen. In einer besonders bevorzugten Ausführungsform besteht die Kopfkontaktfläche aus zwei Teilflächen, die von der Längsachse den gleichen Abstand aufweisen und um 180° voneinander versetzt sind. Die Teilflächen weisen dabei vorzugsweise die gleiche Form auf, wobei eine rechteckige oder quadratische Form bevorzugt ist.

Der Kopf kann jede für die Ausführung der Erfindung geeignete Form aufweisen, wie z. B. die Form einer Scheibe oder eines Schraubenkopfes, etwa einer Sechskantschraube oder einer Hammerschraube oder diesen Formen ähnliche Formen. Insbesondere bevorzugt ist der Kopf quaderförmig ausgeführt, bzw. weist eine im Wesentlichen quaderförmige Umhüllende auf, insbesondere bevorzugt eines länglichen Quaders.

Die Befestigungsvorrichtung kann teilweise oder ganz aus Kunststoff, Metallen oder anderen Werkstoffen bestehen. Vorteilhaft können sich elastische Materialien, insbesondere als Materialien für die keilförmigen Teilabschnitte der Unterlegscheiben, auswirken, da diese bei der Einstellung der gewünschten Abstände bzw. der gewünschten Verbindungskraft einen größeren Spielraum zulassen.

In einer bevorzugten Ausführungsform weist die zweite Unterlegscheibe einen keilförmigen Teilabschnitt auf und der keilförmige Teilabschnitt der zweiten Unterlegscheibe steht mit dem keilförmigen Teilabschnitt der ersten Unterlegscheibe in Kontakt. Dadurch können zwei keilförmigen Teilabschnitte übereinander bewegt werden, was zu einer einfachen und gleichmäßigen Einstellung des Abstandes zwischen den Unterlegscheiben und somit des Abstands zwischen der dem Stiftende nächsten Unterlegscheibe und der Kontaktfläche führt. Somit wird auch ermöglicht, dass die auf die zu verbindenden Verbindungsteile wirkende Verbindungskraft in einem feinen Bereich eingestellt werden kann, was insbesondere am Ende des Anziehvorgangs von Vorteil sein kann.

Als "keilförmiger Teilabschnitt" ist erfindungsgemäß ein Abschnitt auf einer Unterlegscheibe zu verstehen, der ein oder mehrere keilförmige Elemente aufweist. Das keilförmige Element oder die keilförmigen Elemente können keilförmige Erhebungen auf der Unterlegscheibe oder keilförmige Ausnehmungen in der Unterlegscheibe sein. Der Begriff "Ausnehmung" ist nicht darauf zu beschränken, dass Material aus der Unterlegscheibe entfernt wird, sondern der Begriff umfasst auch, dass Ausnehmungen durch andere Fertigungstechniken wie etwa der Gießtechnik hergestellt werden.

Sinnvollerweise weist der keilförmige Teilabschnitt der ersten Unterlegscheibe und der keilförmige Teilabschnitt der zweiten Unterlegscheibe keilförmige Elemente auf, die aufeinander abgestimmt sind, d. h. die keilförmigen Elemente, die übereinander bewegt werden, weisen die gleiche Keildickensteigung und vorteilhafterweise die gleiche Keilbreite und Länge sowie den gleichen Längenverlauf auf, wobei die Keildicken in umgekehrter Richtung zunehmen, wenn die keilförmigen Elemente übereinander angeordnet sind.

In einer bevorzugten Ausführungsform steht die Kopfkontaktfläche mit der zweiten Unterlegscheibe in Kontakt. Dadurch wird eine kompakte Bauweise der Befestigungsvorrichtung ermöglicht. Es ist damit nicht notwendig, weitere Bauteile oder Elemente wie z. B. einen Anlagebund für die zweite Unterlegscheibe zwischen der zweiten Unterlegscheibe und der Kopfkontaktfläche anzubringen. Diese Ausführungsform macht sich zu Nutze, dass die Klemmkräfte, die auf die zweite Unterlegscheibe wirken, unmittelbar in den Kopf weitergeleitet werden.

In einer bevorzugten Ausführungsform weist die zweite Unterlegscheibe eine Ausnehmung auf. Dabei ist der Kopf des Befestigers zumindest teilweise in der Ausnehmung angeordnet. Auf diese Weise kann eine kompakte und platzsparende Anordnung gewährleistet werden und ein Überstehen des Kopfes über die erste Unterlegscheibe hinaus kann vermieden oder zumindest verringert werden. Ebenso erlaubt es eine solche Ausführungsform, die Höhe der Unterlegscheibe (Erstreckung in Richtung der Längsachse des Stifts) zu erhöhen, so dass eine Umfangsfläche entsteht, an der ein Werkzeug besonders gut angreifen kann.

In einer bevorzugten Ausführungsform weist die zweite Unterlegscheibe einen hexagonalen Umfang auf. Dadurch ist es möglich, für Schraubverbindungen geeignetes standardisiertes Werkzeug zum Anziehen der Unterlegscheibe zu verwenden, wie beispielsweise Schraubenschlüssel. Derartiges Werkzeug ist in vielen Montagehallen und Produktionsstätten vorhanden.

Eine zweite Variante der Erfindung, bei der eine zweite Unterlegscheibe entbehrlich ist, sieht vor, dass die Kopfkontaktfläche mit dem keilförmigen Teilabschnitt einer Unterlegscheibe in Kontakt steht und die Kopfkontaktfläche sich entlang der Oberfläche des keilförmigen Teilabschnitts bewegt, wenn die Unterlegscheibe und der Befestiger sich relativ zueinander um die Längsachse des Stifts drehen. Dabei wird der Abstand zwischen der Kopfkontaktfläche und der dem Stiftende zugewandten Oberfläche der Unterlegscheibe erhöht und dadurch der Abstand zwischen der Unterlegscheibe und der Kontaktfläche verringert. Die Verbindungsteile werden zwischen der Unterlegscheibe und der Kontaktfläche angeordnet, so dass die Verringerung des Abstands zwischen der Unterlegscheibe und der Kontaktfläche die auf die Verbindungsteile ausgeübte Verbindungskraft erhöht.

In einer bevorzugten Ausführungsform der zweiten Variante der Erfindung ist es vorgesehen, dass die Unterlegscheibe dazu vorgesehen ist, relativ zum Befestiger um die Längsachse des Stifts gedreht zu werden, während der Befestiger nicht dazu vorgesehen ist, um die Längsachse des Stifts gedreht zu werden. Es ist auch alternativ denkbar, dass die Unterlegscheibe nicht dazu vorgesehen ist, um die Längsachse des Stifts gedreht zu werden, während der Befestiger dazu vorgesehen ist, um die Längsachse des Stifts gedreht zu werden. Alternativ denkbar ist auch, dass sich der Befestiger und die Unterlegscheibe in entgegengesetzte Rotationsrichtungen drehen.

In einer weiteren bevorzugten Ausführungsform der zweiten Variante der Erfindung wird das Drehmoment über die Unterlegscheibe eingeleitet. Hierzu kann die zu drehende Unterlegscheibe in einer bevorzugten Ausführungsform besonders ausgebildet sein, beispielsweise einen hexagonalen Umfang aufweisen, an den ein Werkzeug angreifen kann. In einer alternativen Ausführungsform der zweiten Variante der Erfindung wird das Drehmoment über den Kopf eingeleitet, so dass sich dieser mit dem an ihm vorgesehene Stift relativ zu der Unterlegscheibe dreht.

In einer bevorzugten Ausführungsform der zweiten Variante der Erfindung weist die Kopfkontaktfläche einen keilförmigen Teilabschnitt auf und der keilförmige Teilabschnitt der Kopfkontaktfläche steht mit dem keilförmigen Teilabschnitt der Unterlegscheibe in Kontakt.

In einer bevorzugten Ausführungsform der zweiten Variante der Erfindung sind die Kopfkontaktfläche und die Längsachse des Stifts senkrecht zueinander ausgerichtet. Bevorzugt besteht die Kopfkontaktfläche aus mehreren Teilflächen, die besonders bevorzugt in einer Ebene liegen. In einer besonders bevorzugten Ausführungsform der zweiten Variante der Erfindung besteht die Kopfkontaktfläche aus zwei Teilflächen, die von der Längsachse den gleichen Abstand aufweisen und um 180° voneinander versetzt sind. Die Teilflächen weisen dabei vorzugsweise die gleiche Form auf, wobei eine rechteckige oder quadratische Form bevorzugt ist.

Vorzugsweise weisen dabei die Teilflächen jeweils ein keilförmiges Element auf, wobei die Keildicke des keilförmigen Elements der ersten Teilfläche in einer Richtung zunimmt und die Keildicke des keilförmigen Elements der zweiten Teilfläche in der entgegengesetzten Richtung zunimmt. Vorzugsweise handelt es sich dabei um eine Richtung, die senkrecht zur Längsachse und senkrecht zu einer Verbindungslinie zwischen den Teilflächen verläuft, wobei die Verbindungslinie bevorzugt durch die Flächenmittelpunkte der Teilflächen und durch die Längsachse verläuft.

Eine derart ausgebildete Kopfkontaktfläche eignet sich besonders gut dazu, über einen keilförmigen Teilabschnitt der Unterlegscheibe bewegt zu werden, wenn der keilförmige Teilabschnitt der Unterlegscheibe derart ausgebildet ist, dass dieser aus zwei keilförmigen Elementen besteht, die sich über ein Ringsegment erstrecken, wobei die Keildicken der keilförmigen Elemente gleichermaßen im Uhrzeigersinn in Umfangsrichtung zunehmen und die Ringsegmente sich vorzugsweise über einen Kreisbogen mit einem Zentriwinkel von etwa 180° erstrecken.

Der Ausdruck "die Kopfkontaktfläche weist einen keilförmigen Teilabschnitt auf" umfasst nicht nur Ausführungsformen, bei denen die Kopfkontaktfläche keilförmige Teilabschnitte aufweist, sondern auch Ausführungsformen bei denen die Kopfkontaktfläche einen schrägen Verlauf aufweist, wobei unter schrägem Verlauf insbesondere gemeint ist, dass die Kopfkontaktfläche (bzw. deren Teilflächen) geneigt zur Horizontalen verläuft, wenn der Befestiger derart angeordnet ist, dass die Längsachse des Stifts vertikal verläuft. Die geneigte Kopfkontaktfläche bzw. die geneigten Teilflächen der Kopfkontaktfläche entsprechen in funktionaler Hinsicht den Oberflächen der keilförmigen Elemente, die vorgesehen sind, bei der Relativbewegung zwischen der Kopfkontaktfläche und der Unterlegscheibe mit dem keilförmigen Teilabschnitt der Unterlegscheibe in Kontakt zu stehen.

Es ist auch eine Ausführungsform denkbar, bei der der keilförmige Teilabschnitt der Kopfkontaktfläche durch eine Ausnehmung, inbesondere eine Nut in der Kopfkontaktfläche gebildet wird, die einen schräg verlaufenden Grund hat. Die Ausnehmung, bzw. Nut ist an einem Ende tiefer als am anderen Ende ihrer Längserstreckung.

In einer bevorzugten Ausführungsform weist die, bzw. bei mehreren nebeneinander angeordneten Unterlegscheibe die dem Kopf am entferntesten angeordnete Unterlegscheibe zumindest einen Vorsprung auf, der verhindert, dass sich die Unterlegscheibe relativ zu einer ebenen Oberfläche in einer Rotationsrichtung dreht.

Bevorzugt handelt es sich dabei um die Rotationsrichtung der zweiten Unterlegscheibe, wenn die zweite Unterlegscheibe sich relativ zur ersten Unterlegscheibe dreht, um den Abstand zwischen den voneinander wegweisenden Oberflächen der Unterlegscheiben zu erhöhen. Durch den Vorsprung wird verhindert, dass sich die erste Unterlegscheibe in der gleichen Rotationsrichtung dreht wie die zweite Unterlegscheibe und sich dadurch der Abstand zwischen den Unterlegscheiben erhöht.

Bei der Erfindungsvariante, bei der die Kopfkontaktfläche sich entlang der Oberfläche des keilförmigen Teilabschnitts der Unterlegscheibe bewegt, handelt es sich bei der Rotationsrichtung bevorzugt um die Rotationsrichtung des Befestigers, wenn der Befestiger und die Unterlegscheibe sich relativ zueinander drehen, um den Abstand zwischen der Kopfkontaktfläche und der dem Stiftende zugewandten Oberfläche der Unterlegscheibe zu erhöhen.

Der Vorsprung kann beispielsweise zahnförmig ausgebildet sein und sich in die ebene Oberfläche haken, einbohren oder dergl. Bevorzugt ist eine Vielzahl von Vorsprüngen. Besonders bevorzugt ist der Vorsprung oder sind die Vorsprünge am Umfang der (ersten) Unterlegscheibe angebracht.

Als ebene Oberfläche kommt insbesondere ein Verbindungsteil in Betracht, auf dem die Unterlegscheibe angeordnet ist und mit dem die Unterlegscheibe in Kontakt steht.

In einer bevorzugten Ausführungsform erstreckt sich der keilförmige Teilabschnitt über ein Ringsegment, wobei die Keildicke in Umfangsrichtung zunimmt. Das Ringsegment kann sich über einen Kreisbogen mit einem Zentriwinkel zwischen 0 und 360° erstrecken. Bevorzugt weist die Unterlegscheibe mehrere keilförmige Teilabschnitte auf, die insbesondere bevorzugt gleichmäßig in Umfangsrichtung verteilten sind und gleiche Maße aufweisen, wobei entweder die Keildicken aller keilförmigen Elemente gleichermaßen im Uhrzeigersinn zunehmen oder die Keildicken aller keilförmigen Elemente gleichermaßen im Uhrzeigersinn abnehmen. In einer besonders bevorzugten Ausführungsform weist die Unterlegscheibe zwei keilförmige Teilabschnitte auf, die sich jeweils über einen Kreisbogen mit einem Zentriwinkel von 160 bis 180° erstrecken. In einer alternativen Ausführungsform erstreckt sich der keilförmige Teilabschnitt so, dass er in Draufsicht die Form des Buchstabens L oder des Buchstabens U aufweist, beispielsweise mit dem flachen Ende am kurzen Ende des L, bzw. an einem Ende des U und dem erhöhten Ende am langen Ende des L, bzw. am anderen Ende des U.

Bei den im Rahmen der Erfindung eingesetzten keilförmigen Teilabschnitten ist es in einer besonders bevorzugten Ausführungsform forgesehen, dass die Oberfläche des Keils (die schräg verlaufende Fläche) gleichmäßig ansteigt. Es sind aber auch Ausführungsformen denkbar, bei denen die Oberfläche des Keils nur im Sinne einer Umhüllenden schräg verläuft, bzw nur im Sinne der den gemittelten Verlauf der Oberfläche darstellenden ebenen Fläche schräg verlauft, genau genommen jedoch onduliert ausgebildet ist. Ebenso sind Kombinationen dieser Ausführungsformen denkbar, bei denen der keilförmige Teilabschnitt Abschnitte aufweist, in denen die die Oberfläche (die schräg verlaufende Fläche) gleichmäßig ansteigt während sie in anderen Abschnitten ondulierend ausgebildet ist und nur im gemittelten Verlauf schräg verlaufend ausgebildet ist.

In einer vorteilhaften Ausführungsform weist die , bzw. bei mehreren nebeneinander angeordneten Unterlegscheibe die dem Kopf am nächsten angeordnete Unterlegscheibe, die mit der Kopfkontaktfläche in Kontakt steht, Vorsprünge auf, die in Ausnehmungen in der Kopfkontaktfläche eingreifen, um die Rotation des Kopfes relativ zu der Unterlegscheibe zu verhindern. Zusätzlich oder in einer alternativen Ausführungsform weist die Unterlegscheibe, die mit der Kopfkontaktfläche in Kontakt steht, Ausnehmungen auf, in die Vorsprünge in der Kopfkontaktfläche eingreifen, um die Rotation des Kopfes relativ zu der Unterlegscheibe zu verhindern.

Durch die somit ermöglichte drehfeste Verbindung zwischen dem Kopf und der zweiten Unterlegscheibe wird der Befestigungsvorgang insofern erleichtert, als dass es genügt, das zur Befestigung erforderliche Drehmoment lediglich entweder über den Kopf oder über die zweite Unterlegscheibe einzuleiten. Sollen sich der Kopf und die Unterlegscheibe nicht drehen, so genügt es bei dieser Ausführungsform, entweder den Kopf oder die zweite Unterlegscheibe gegen Rotation zu sichern. Des Weiteren kann durch den Eingriff von Vorsprüngen und Ausnehmungen eine Sicherung gegen Relativdrehung bereitgestellt werden, und somit eine Rückdrehsicherung gegen Lockern oder Lösen der Verbindung.

Bei der Erfindungsvariante, bei der die Kopfkontaktfläche sich entlang der Oberfläche des keilförmigen Teilabschnitts der Unterlegscheibe bewegen muss, um den Abstand zwischen der Kopfkontaktfläche und der dem Stiftende zugewandten Oberfläche der Unterlegscheibe zu erhöhen, dienen die Vorsprünge und Ausnehmungen der Rückdrehsicherung gegen Lösen oder Lockern der Befestigungsvorrichtung. Es wird somit erst am Ende des Befestigungsvorgangs, d. h. nach dem Erreichen der gewünschten auf die Verbindungsteile wirkenden Verbindungskraft, mittels der Vorsprünge und Ausnehmungen verhindert, dass der Kopf relativ zu der Unterlegscheibe rotieren kann.

Bevorzugt kommen als Vorsprünge Nocken und als Ausnehmungen Vertiefungen als zum Eingriff mit den Nocken geeignete Gegenstücke in Betracht. Besonders bevorzugt sind die Nocken auf der Kopfkontaktfläche angebracht und die Vertiefungen entweder in der zweiten Unterlegscheibe in Umfangrichtung verteilt angebracht oder in der Oberfläche des keilförmigen Teilabschnitts der Unterlegscheibe in Umfangrichtung verteilt angebracht, wobei Nocken und Vertiefungen den gleichen Abstand von der Längsachse des Stifts aufweisen. Dadurch kann bei nahezu jeder relativen Drehposition zwischen Kopfkontaktfläche und (zweiter) Unterlegscheibe gewährleistet werden, dass die Nocken in die Vertiefungen eingreifen können, wodurch eine Sicherung der Befestigungsvorrichtung gegen Lösen oder Lockern gewährleistet ist, oder wodurch eine formschlüssig drehfeste Verbindung zwischen Kopfkontaktfläche und zweiter Unterlegscheibe gewährleisten ist.

In einer alternativen Ausführungsform sind die Nocken entweder auf der zweiten Unterlegscheibe in Umfangrichtung verteilt angebracht oder auf der Oberfläche des keilförmigen Teilabschnitts der Unterlegscheibe in Umfangrichtung verteilt angebracht und die Vertiefungen sind in der Kopfkontaktfläche angebracht.

Alternativ ist auch der Einsatz von elastischen Elementen als Vorsprünge denkbar, wobei die elastischen Elemente bei Drehung in einer Rotationsrichtung nachgeben und sich aus dem Eingriff mit den Ausnehmungen befreien, wohingegen sich die elastischen Elemente bei Drehung in entgegengesetzter Rotationsrichtung in die Ausnehmungen verhaken. Auf diese Weise kann eine (ungewollte) Rotationsbewegung in einer Richtung gesperrt werden. Es sind alternativ auch Ausführungsformen möglich, bei denen Ausnehmungen nicht nötig sind, um eine Rückdrehsicherung oder drehfeste Verbindung einzustellen. Hierbei können z. B. Vorsprünge einer Unterlegscheibe in der Art von Mitnehmern einen keine Ausnehmungen aufweisenden Kopf mit der Unterlegscheibe mitdrehen oder diesen wie Arretierteile an einer Relativdrehung hindern.

In einer vorteilhaften Ausführungsform weist der Stift des Befestigers einen quadratischen Querschnitt auf und die Öffnung in der ersten Unterlegscheibe weist einen quadratischen Querschnitt auf, der verhindert, dass die erste Unterlegscheibe sich relativ zu dem Stift dreht. Auf diese Weise wird ein Formschluss zwischen dem Stift und der ersten Unterlegscheibe ermöglicht. Dies kann insbesondere dadurch erreicht werden, dass die Diagonale des quadratischen Querschnitts des Stifts größer ist als eine Seite des quadratischen Querschnitts der Öffnung in der ersten Unterlegscheibe. Alternativ denkbar sind allerdings auch andersförmige Querschnitte wie z. B. dreieckige, rechteckige oder polygonale Querschnitte.

Durch die somit ermöglichte drehfeste Verbindung zwischen dem Stift (und somit dem Kopf) und der ersten Unterlegscheibe wird der Befestigungsvorgang insofern erleichtert, als dass es genügt, das zur Befestigung erforderliche Drehmoment lediglich entweder über den Kopf oder über die erste Unterlegscheibe einzuleiten. Sollen sich der Kopf und die Unterlegscheibe nicht drehen, so genügt es hierbei, entweder den Kopf oder die erste Unterlegscheibe gegen Rotation zu sichern.

In einer besonders bevorzugten Ausführungsform ist die Kontaktfläche auf einem gefederten Element ausgebildet, wobei die Federkraft das Element weg von der Längsachse des Stifts vorspannt. Insbesondere vorteilhaft wirkt sich diese Ausführungsform aus, wenn die Kontaktfläche einen größeren Abstand von der Längsachse des Stifts aufweist als die Ränder der Verbindungsbohrungen bzw. Verbindungslöcher. Hierbei kann der Stift in die Verbindungsbohrungen bzw. Verbindungslöcher eingesteckt werden, wobei die gefederten Elemente in einer zur Längsachse des Stifts weisenden Richtung gezwungen werden. Treten die gefederten Elemente im Zuge des weiteren Einschiebens des Stifts aus den Verbindungsbohrungen bzw. Verbindungslöchern heraus, schnappen die gefederten Elemente aus, wodurch die Verbindungsteile zwischen der dem Stiftende nächsten Unterlegscheibe und der Kontaktfläche gesperrt werden.

Das gefederte Element kann aus einem oder mehreren Teilabschnitten bestehen. Vorteilhafterweise sind Teilabschnitte des gefederten Elements gleichmäßig am Stiftumfang verteilt angeordnet. Beispielsweise können zwei Teilabschnitte um 180° versetzt am Stiftumfang angebracht sein. Auf jedem Teilabschnitt des gefederten Elements ist ein Anteil der Kontaktfläche ausgebildet. Somit kann die Kontaktfläche aus mehreren Segmenten bestehen.

Die Befestigungsvorrichtung eignet sich besonders gut zum Befestigen von zwei Elementen, wobei beide Elemente zwischen der (ersten) Unterlegscheibe und der Kontaktfläche angeordnet sind. Unter Elemente sind insbesondere Verbindungsteile zu verstehen, d. h. Teile, die dazu vorgesehen sind, miteinander verbunden zu werden, wie beispielsweise zwei Platten. Besonders vorteilhaft ist der Einsatz des erfindungsgemäßen Befestigungsmittels in der Automobilindustrie, da hier besonders hoher Wert auf Qualität, Zuverlässigkeit und zeiteffiziente Produktionszeiten gelegt wird. Durch die Einstellbarkeit der Verbindungskraft, die bei aus dem Stand der Technik bekannten gattungsgemäßen Befestigungsvorrichtungen starr vorgegeben ist, bietet die erfindungsgemäße Befestigungsvorrichtung variable Einsatzmöglichkeiten. Als beispielhafte Einsatzgebiete kommen die Befestigung von Innen-und Außenverkleidungen an Fahrzeugkarosserien oder die Befestigung von Airbags in Fahrzeugen. Die Montage erfolgt schnell und aufgrund der auf einem gefederten Element ausgebildeten Kontaktfläche von nur einer Seite. Es muss beispielsweise nicht wie bei einer Durchsteckschraubenverbindung für das Montagepersonal ein ausreichend großer Zugang auf der Gegenseite der Verbindung existieren, um das Stiftende mit einer Schraubenmutter zu versehen. Die Befestigungsvorrichtung, die nicht wie Schraubverbindungen, deren Komponenten in der Regel aus Stahl bestehen, auch aus leichterem Material wie Kunststoff bestehen kann, kann zudem der Gewichtsreduzierung förderlich sein.

Die erfindungsgemäße Befestigungsvorrichtung eignet sich aber auch besonders gut zum Befestigen von drei oder mehr Elementen. Weitere Industriezweige und Anwendungsgebiete, in denen die Vorteile der Erfindung besonders gut zum Tragen kommen, sind beispielsweise der Maschinenbau, die Energiewirtschaft, der Kraftfahrzeugbau, der Flugzeugbau oder die Landwirtschaft.

Die Erfindung wird nachfolgend anhand der folgenden Figuren, die lediglich beispielhafte und vorteilhafte Ausführungsformen der Erfindung zeigen, näher erläutert. Darin zeigen:
- Fig. 1:: eine Explosionszeichnung einer Ausführungsform der erfindungsgemäßen Befestigungsvorrichtung zur Verbindung von zwei Platten (erste Variante der Erfindung);
- Fig. 2:: eine montierte Version der in Fig. 1 dargestellten Ausführungsform in einer perspektivischen Ansicht;
- Fig. 3:: eine Ausführungsform der zweiten Variante der Erfindung in einer Draufsicht von oben;
- Fig. 4 a), b) c):: eine Ausführungsform des Befestigers in einer zweiten Variante der Erfindung in einer Seitenansicht (Fig. 4a)), einer Frontalansicht (Fig. 4b)) und in einer perspektivischen Ansicht (Fig. 4c));
- Fig. 5 a), b):: eine weitere Ausführungsform der ersten Varainte der Erfindung mit einer weiteren Ausführungsform für eine Rückdrehsicherung in einer perspektivischen Ansicht (Fig. 5a)) und einer Draufsicht von oben (Fig. 5b));
- Fig. 6 a), b):: eine weitere Ausführungsform der ersten Varainte der Erfindung mit einer weiteren Ausführungsform für eine Rückdrehsicherung in einer perspektivischen Ansicht (Fig. 6a)) und einer Draufsicht von oben (Fig. 6b)); und
- Fig. 7 a), b), c):: eine weitere Ausführungsform der ersten Varainte der Erfindung mit einer weiteren Ausführungsform für eine Rückdrehsicherung in einer perspektivischen Ansicht (Fig. 7a)) und einer Draufsicht von oben (Fig. 7b)) und einer Schnittansicht gemäß der Schnittlinie A-A in Fig. 7 a)) (Fig 7c)).

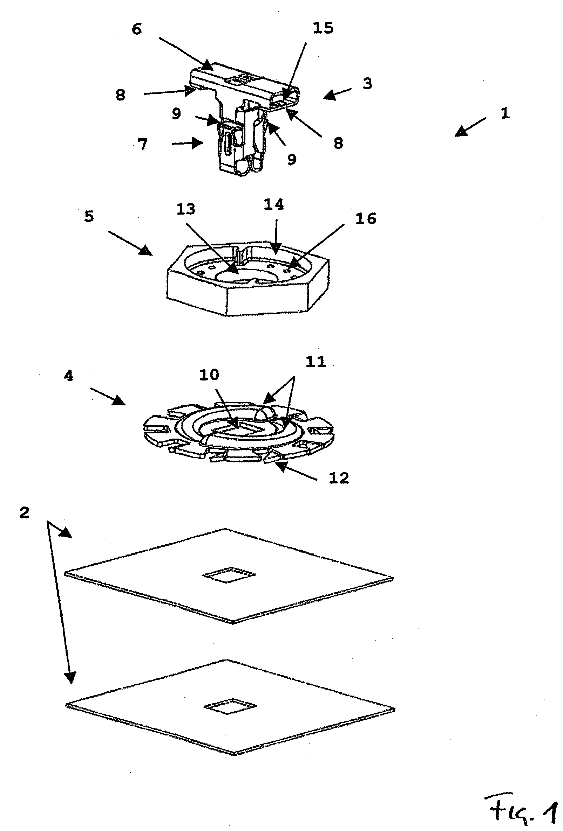

Figur 1 zeigt eine Befestigungsvorrichtung 1, die dazu vorgesehen ist, zwei Platten 2 miteinander zu verbinden. Die Befestigungsvorrichtung weist einen Befestiger 3, eine erste Unterlegscheibe 4 und eine zweite Unterlegscheibe 5 auf.

Der Befestiger weist einen Kopf 6 und einen Stift 7 auf. Der Kopf 6 weist eine aus zwei Teilflächen bestehende Kopfkontaktfläche 8 auf. Am Stift 7 ist eine aus zwei Segmenten bestehende Kontaktfläche 9 angebracht, die der Kopfkontaktfläche 8 gegenübersteht, wobei die Segmente auf gefederten Elementen ausgebildet sind, so dass die Segmente der Kontaktfläche 9 in einer zur Längsachse des Stifts 7 weisenden Richtung eingedrückt werden können. Im Rahmen der Beschreibung der Erfindung umfasst der Begriff "gegenüberstehen" auch solche Anordnungen, wie bei dem Befestiger der 1 gezeigt, bei der die Segmente der Kontaktfläche 9 um 90° um die Längsachse des Stifts 7 gedreht bezüglich den Teilflächen der Kopfkontaktfläche 8 sind. Es kommt nicht darauf an, dass die Segmente der Kontaktfläche 9 den Teilflächen der Kopfkontaktfläche 8 unmittelbar gegenüber stehen. Die Segmente der Kontaktfläche können auch nur in einer Ebene liegen, die im Wesentlichen parallel zu der Ebene ist, in der die - gemäß der Ausführungsform der 1 senkrecht zur Längsachse des Stifts 7 verlaufenden - der Kopfkontaktfläche 8 liegen, um das Erfordernis des "Gegenüberstehens" zu erfüllen.

Die erste Unterlegscheibe 4 weist eine Öffnung 10 zum Durchstecken des Stifts 7 auf. Die Öffnung 10 ist quadratisch und verhindert somit durch Formschluss, dass sich der Stift 7, der im Wesentlichen auch einen quadratischen Querschnitt aufweist, relativ zur ersten Unterlegscheibe 4 drehen kann. Die erste Unterlegscheibe 4 weist zudem zwei keilförmige Teilabschnitte 11 auf, deren Keildicken in Umfangsrichtung im Uhrzeigersinn zunehmen. Die keilförmigen Elemente erstrecken sich über ein Ringsegment mit einem Zentriwinkel von etwa 180°. Zudem weist die erste Unterlegscheibe 4 zahnförmige Vorsprünge 12 auf.

Die zweite Unterlegscheibe 5 weist eine Öffnung 13 auf, um den Stift 7 hindurchtreten zu lassen und um eine Drehung der zweiten Unterlegscheibe 5 relativ zum Stift 7 zu ermöglichen. Zudem weist die zweite Unterlegscheibe 5 eine Ausnehmung 14 auf, die dazu vorgesehen ist, dass der Kopf 6 zumindest teilweise in der Ausnehmung 14 angeordnet ist. Auf der Unterseite der zweiten Unterlegscheibe 5 befinden sich zwei keilförmige Teilabschnitte (nicht dargestellt), deren Keildicken in Umfangsrichtung entgegen dem Uhrzeigersinn zunehmen. Die keilförmigen Elemente erstrecken sich ebenfalls über ein Ringsegment mit einem Zentriwinkel von etwa 180°.

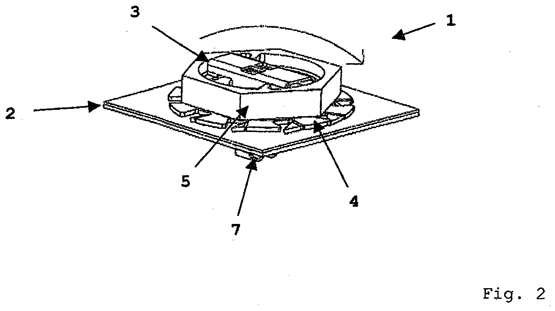

Fig. 2 zeigt den Zusammenbau der Komponenten aus Fig. 1. Hierbei ist zunächst der Stift 7 durch die zweite Unterlegscheibe 5, dann durch die erste Unterlegscheibe 4 und schließlich durch die Platten 2 durchgesteckt worden. Bei dem Durchgang der Kontaktfläche 9 durch die erste Unterlegscheibe 4 und durch die Platten 2, sind die Segmente der Kontaktfläche 9 aufgrund der gefederten Elemente in einer zur Längsachse des Stifts 7 weisenden Richtung eingedrückt worden und haben sich nach dem Passieren der Öffnungen wieder in die Ausgangsstellung zurückbewegt, so dass dadurch verhindert wird, dass der Stift 7 wieder durch die Öffnungen gezogen werden kann. Die Unterlegscheiben und die Platten sind somit zwischen der Kontaktfläche 9 und der Kopfkontaktfläche 8, die mit der zweiten Unterlegscheibe 5 in Kontakt steht, angeordnet.

Durch Anziehen der zweiten Unterlegscheibe 5 (angedeutet durch den runden Pfeil) dreht sich diese relativ zum Stift 7 und zur ersten Unterlegscheibe 4, wobei sich die erste Unterlegscheibe 4 insbesondere aufgrund der zahnförmigen Vorsprünge 12 nicht mit der zweiten Unterlegscheibe 5 mitdreht und sich somit auch nicht relativ zur oberen Platten dreht. Bei der Relativdrehung zwischen den Unterlegscheiben bewegt sich der keilförmige Teilabschnitt der zweiten Unterlegscheibe 5 über den keilförmigen Teilabschnitt 11 der ersten Unterlegscheibe 4, wodurch der Abstand zwischen den voneinander wegweisenden Oberflächen der Unterlegscheiben erhöht wird und dadurch der Abstand zwischen der ersten Unterlegscheibe 4 und der Kontaktfläche 9 verringert wird. Da die Platten 2 zwischen der ersten Unterlegscheibe 4 und der Kontaktfläche 9 angeordnet sind, erhöht sich dadurch die auf die Platten 2 wirkende Verbindungskraft, wodurch diese miteinander fest verbunden werden.

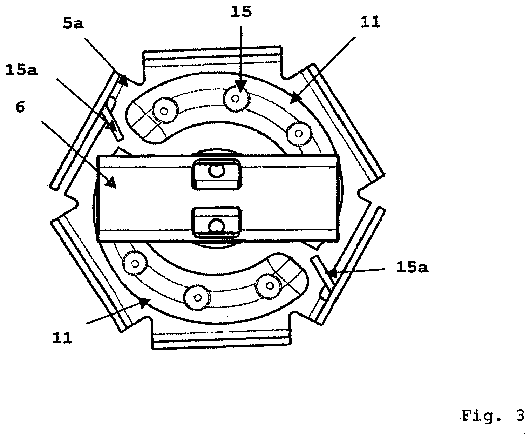

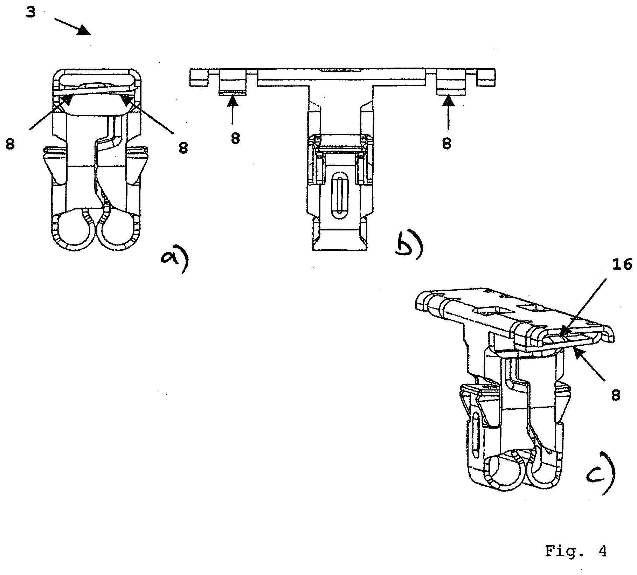

Fig. 3 zeigt eine beispielhafte Ausführungsform einer zweiten Variante der Erfindung. Im Unterschied zur ersten Variante findet hier eine Abstandserweiterung zwischen der Kopfkontaktfläche 8 und der dem Stiftende zugewandten Oberfläche der lediglich einen Unterlegscheibe 5a statt. Dabei stehen bei der Relativbewegung zwischen der Kopfkontaktfläche 8 und der Unterlegscheibe 5a die Kopfkontaktfläche 8 und der keilförmige Teilabschnitt 11 der Unterlegscheibe 5a in Kontakt. Die drei Abbildungen in Fig. 4 zeigen dabei aus verschiedenen Ansichten eine besonders vorteilhafte Ausführungsform eines Befestigers 3, der eine aus zwei Teilflächen bestehende Kopfkontaktfläche 8 aufweist. Die Teilflächen verlaufen dabei schräg, so dass diese sich dazu eignen, über die keilförmigen Elemente des keilförmigen Teilabschnitts 11 der Unterlegscheibe 5a aus Fig. 3 bewegt zu werden. Wie in Fig. 3 ersichtlich, weisen die Oberflächen der keilförmigen Elemente 11 Vorsprünge 15 in Form von Nocken auf, die gleichmäßig in Umfangsrichtung verteilt sind. Diese können in Ausnehmungen 16 in Form von Vertiefungen, die in den Teilflächen 8 angebracht sind (siehe Fig. 4) eingreifen. Dadurch kann während des Anziehens bei nahezu jeder relativen Drehposition zwischen Kopfkontaktfläche 8 und Unterlegscheibe 5a gewährleistet werden, dass die Nocken 15 der keilförmigen Elemente 11 in die Vertiefungen 16 der Teilflächen 8 eingreifen können, wodurch eine Rückdrehsicherung der Befestigungsvorrichtung 1 gegen Lösen oder Lockern gewährleistet ist. Die gleiche Art der Rückdrehsicherung eignet sich ebenfalls zur Sicherung der Befestigungsvorrichtung der ersten Variante der Erfindung (siehe hierzu Bezugszeichen 15 und 16 in Fig. 1).

Eine weitere Rückdrehsicherung ist durch die elastischen Vorsprünge 15a gewährleistet: Diese sind an der Unterlegscheibe derart positioniert und ausgerichtet, dass bei der das Anziehen bewirkenden Relativbewegung zwischen der Unterlegscheibe 5a und des Kopfes 6 die Vorsprünge 15a elastisch nachgeben und dadurch vom Kopf 6 passiert werden, wohingegen eine Relativbewegung in die entgegengesetzte Richtung durch die Vorsprünge 15a blockiert wird.

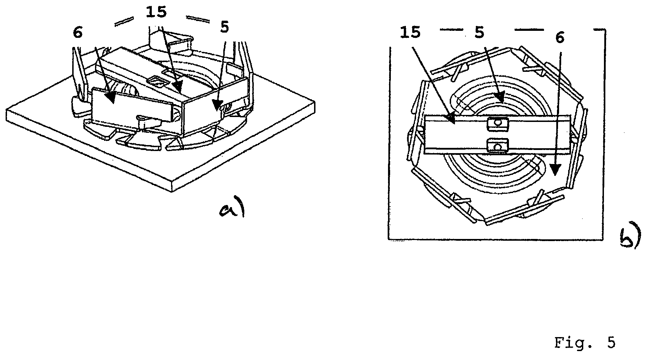

Fig. 5 zeigt nochmals eine perspektivische Darstellung (links) von Vorsprüngen 15, wie diese in Fig. 3 in der Draufsicht dargestellt sind. In dem Ausführungsbeispiel gemäß Fig. 5 dienen diese der Rückdrehsicherung zwischen zweiter Unterlegscheibe 5 und Kopf 6 (erste Variante der Erfindung).

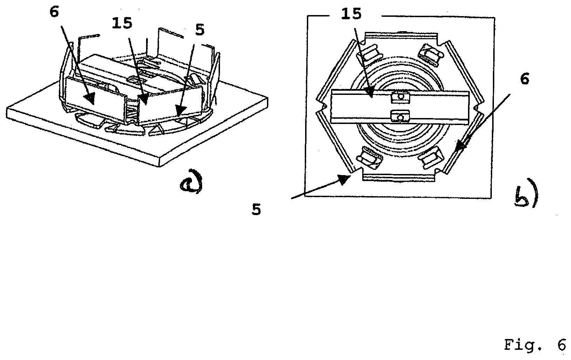

In Fig. 6 ist ein weiteres Ausführungsbeispiel für eine Rückdrehsicherung dargestellt. Hierin ist eine Ausführungsform gemäß der ersten Variante der Erfindung abgebildet, wobei die gezeigte Rückdrehsicherung sich auch für die zweite Variante der Erfindung eignet. In dem Ausführungsbeispiel ist die zweite Unterlegscheibe 5 dazu vorgesehen, sich relativ zum Kopf 6 im Uhrzeigersinn zu drehen. Dabei passieren die elastischen Vorsprünge 15 den Kopf 6, wobei diese nach unten gedrückt werden und sich nach dem Passieren des Kopfes 6 wieder in die Ausgangsstellung zurückbewegen. Dadurch wird eine die Verbindung lösende oder lockernde Relativbewegung in die entgegengesetzte Richtung verhindert.

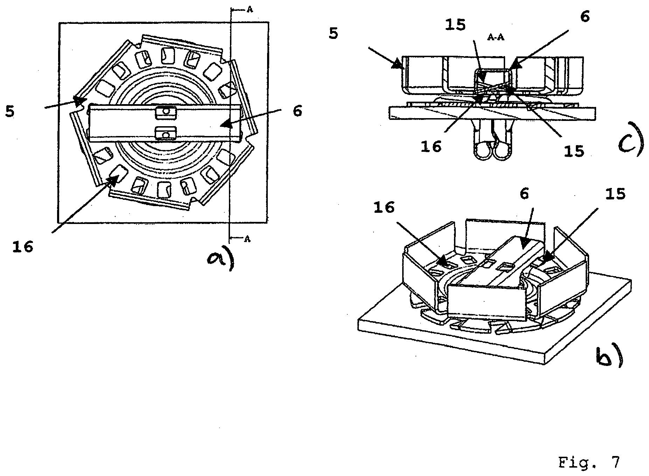

Fig. 7 zeigt ein weiteres Ausführungsbeispiel für eine Rückdrehsicherung für die erste Variante der Erfindung, wobei dieser Typ der Rückdrehsicherung sich auch für die zweite Variante der Erfindung eignet. Dabei zeigt die linke Abbildung eine Draufsicht der Befestigungsvorrichtung 1. Die rechte obere Abbildung zeigt eine Schnittansicht gemäß Schnitt A der linken Abbildung. In der rechten unteren Abbildung ist eine perspektivische Darstellung der Befestigungsvorrichtung dargestellt.

In der linken Abbildung ist eine Vielzahl von Ausnehmungen 16 in Form von Öffnungen in der zweiten Unterlegscheibe 5 dargestellt. Die Öffnungen 16 sind gleichmäßig in Umfangsrichtung verteilt. In der Schnittansicht (oben links) sind an beiden Enden des Kopfes 6 an den Teilflächen der Kopfkontaktfläche 8 angebrachte Vorsprünge erkennbar, die elastisch verformbar sind und im unbelasteten Zustand in die Öffnungen 16 eingreifen können.

In diesem Ausführungsbeispiel wird die zweite Unterlegscheibe 5 im Uhrzeigersinn gedreht um eine Befestigung der Vorrichtung zu erreichen. Dabei findet eine Relativdrehung zwischen der zweiten Unterlegscheibe 5 und dem Kopf 6 statt, bei der die Öffnungen 16 die Vorsprünge 15 passieren. Bewegt sich eine Öffnung 16 über einen Vorsprung 15, so greift der Vorsprung 15 in die Öffnung 16 ein. Bei der fortscheitenden Drehbewegung wird sodann der elastische Vorsprung 15 aus der Öffnung 16 herausgedrückt und erst wieder bei Positionierung über einer nächsten Öffnung 16 entlastet und in die Eingriffsposition mit dieser Öffnung 16 zurückbewegt. Bei Bestrebungen einer Relativdrehung in die entgegengesetzte Richtung verhaken sich die Vorsprünge 15 in den Öffnungen 16, wodurch eine Rückdrehsicherung gewährleistet wird.

## Patentansprüche

1. Befestigungsvorrichtung (1) mit einem Befestiger (3), der
- einen Kopf (6) mit einer Kopfkontaktfläche (8)
- und einen sich vom Kopf (6) aus entlang einer Längsachse erstreckenden Stift (7) aufweist,
- wobei der Stift (7) ein Befestigungsende mit einer Kontaktfläche (9), die der Kopfkontaktfläche (8) gegenübersteht, aufweist,
**gekennzeichnet durch** eine erste Unterlegscheibe (4) und eine zweite Unterlegscheibe (5), wobei
- die erste Unterlegscheibe (4) eine geeignet große Öffnung (10) aufweist, um den Stift (7) durch die Öffnung (10) hindurchtreten zu lassen, und die erste Unterlegscheibe (4) einen keilförmigen Teilabschnitt (11) aufweist
- die zweite Unterlegscheibe (5) eine geeignet große Öffnung (13) aufweist, um den Stift (7) durch die Öffnung (13) hindurchtreten zu lassen und um eine Drehung der zweiten Unterlegscheibe relativ zum Befestiger (3) um die Längsachse des Stifts (7) zuzulassen,
wobei die zweite Unterlegscheibe (5) mit dem keilförmigen Teilabschnitt (11) in Kontakt steht und sich entlang der Oberfläche des keilförmigen Teilabschnitts (11) bewegt, wenn die zweite Unterlegscheibe (5) und der Befestiger (3) sich relativ zueinander um die Längsachse des Stifts (7) drehen.

2. Befestigungsvorrichtung (1) nach Anspruch 1, **dadurch gekennzeichnet, dass** die zweite Unterlegscheibe (5) einen keilförmigen Teilabschnitt aufweist und der keilförmige Teilabschnitt der zweiten Unterlegscheibe (5) mit dem keilförmigen Teilabschnitt (11) der ersten Unterlegscheibe (4) in Kontakt steht.

3. Befestigungsvorrichtung (1) nach Anspruch 1 oder 2, **dadurch gekennzeichnet, dass** die Kopfkontaktfläche (8) mit der zweiten Unterlegscheibe (5) in Kontakt steht.

4. Befestigungsvorrichtung (1) nach einem der Ansprüche 1 bis 3, **dadurch gekennzeichnet, dass** die zweite Unterlegscheibe (5) eine Ausnehmung (14) aufweist und dass der Kopf (6) des Befestigers (3) zumindest teilweise in der Ausnehmung (14) angeordnet ist.

5. Befestigungsvorrichtung (1) nach einem der Ansprüche 1 bis 4, **dadurch gekennzeichnet, dass** die zweite Unterlegscheibe (5) einen hexagonalen Umfang aufweist.

6. Befestigungsvorrichtung (1) mit einem Befestiger (3), der
- einen Kopf (6) mit einer Kopfkontaktfläche (8)
- und einen sich vom Kopf (6) aus entlang einer Längsachse erstreckenden Stift (7) aufweist,
- wobei der Stift (7) ein Befestigungsende mit einer Kontaktfläche (9), die der Kopfkontaktfläche (8) gegenübersteht, aufweist,
**gekennzeichnet durch** eine Unterlegscheibe (5a), wobei
- die Unterlegscheibe (5a) eine geeignet große Öffnung aufweist, um den Stift (7) durch die Öffnung hindurchtreten zu lassen und um eine Drehung der Unterlegscheibe (5a) relativ zum Befestiger (3) um die Längsachse des Stifts (7) zuzulassen,
- die Unterlegscheibe (5a) einen keilförmigen Teilabschnitt (11) aufweist
wobei die Kopfkontaktfläche (8) mit dem keilförmigen Teilabschnitt (11) in Kontakt steht und sich entlang der Oberfläche des keilförmigen Teilabschnitts (11) bewegt, wenn die Unterlegscheibe (5a) und der Befestiger (3) sich relativ zueinander um die Längsachse des Stifts (7) drehen.

7. Befestigungsvorrichtung (1) nach Anspruch 6, **dadurch gekennzeichnet, dass** die Kopfkontaktfläche (8) einen keilförmigen Teilabschnitt (11) aufweist und der keilförmige Teilabschnitt (11) der Kopfkontaktfläche (8) mit dem keilförmigen Teilabschnitt (11) der Unterlegscheibe (5a) in Kontakt steht.

8. Befestigungsvorrichtung (1) nach einem der Ansprüche 1 bis 7, **dadurch gekennzeichnet, dass** die Unterlegscheibe, bzw. bei mehreren nebeneinander angeordneten Unterlegscheibe die dem Kopf entferntesten angeordnete Unterlegscheibe zumindest einen Vorsprung (12) aufweist, der verhindert, dass sich die Unterlegscheibe relativ zu einer ebenen Oberfläche in einer Rotationsrichtung dreht.

9. Befestigungsvorrichtung (1) nach einem der Ansprüche 1 bis 8, **dadurch gekennzeichnet, dass** der keilförmige Teilabschnitt (11) sich über ein Ringsegment erstreckt, wobei die Keildicke in Umfangsrichtung zunimmt.

10. Befestigungsvorrichtung (1) nach einem der Ansprüche 1 bis 9, **dadurch gekennzeichnet, dass** die, bzw. bei mehreren nebeneinander angeordneten Unterlegscheibe die dem Kopf am nächsten angeordnete Unterlegscheibe mit der Kopfkontaktfläche (8) in Kontakt steht und Vorsprünge (15) aufweist, die in Ausnehmungen (16) in der Kopfkontaktfläche (8) eingreifen, um die Rotation des Kopfes (6) relativ zu der Unterlegscheibe zu verhindern und/oder dass die, bzw. bei mehreren nebeneinander angeordneten Unterlegscheibe die dem Kopf am nächsten angeordnete Unterlegscheibe mit der Kopfkontaktfläche (8) in Kontakt steht und Ausnehmungen aufweist, in die Vorsprünge in der Kopfkontaktfläche (8) eingreifen, um die Rotation des Kopfes (6) relativ zu der Unterlegscheibe zu verhindern.

11. Befestigungsvorrichtung (1) nach einem der Ansprüche 1 bis 5 oder einem der Ansprüche 8 bis 10, soweit die Ansprüche 8 bis 10 von einem der Ansprüche 1 bis 5 abhängen, **dadurch gekennzeichnet, dass** der Stift (7) des Befestigers (3) einen quadratischen Querschnitt aufweist und dass die Öffnung (10) in der ersten Unterlegscheibe (4) einen quadratischen Querschnitt aufweist, der verhindert, dass sich die erste Unterlegscheibe (4) relativ zu dem Stift (7) dreht.

12. Befestigungsvorrichtung (1) nach einem der Ansprüche 1 bis 11, **dadurch gekennzeichnet, dass** die Kontaktfläche (9) auf einem gefederten Element ausgebildet ist, wobei die Federkraft das Element weg von der Längsachse des Stifts (7) vorspannt.

13. Verwendung der Befestigungsvorrichtung (1) nach Anspruch 1 bis 12 zum Befestigen von zwei Elementen, wobei beide Elemente zwischen der (ersten) Unterlegscheibe und der Kontaktfläche (9) angeordnet sind.

14. Verwendung der Befestigungsvorrichtung (1) nach Anspruch 13, **dadurch gekennzeichnet, dass** der Stift (7) des Befestigers (3) einen quadratischen Querschnitt aufweist und dass zumindest eines zwei Elemente eine Öffnung aufweist, durch die der Stift hindurchtreten kann, und dass die Öffnung einen quadratischen Querschnitt aufweist, der verhindert, dass sich der Stift relativ zu dem Element mit der Öffnung dreht.

## Claims

1. Fitting device (1) with a fitting (3), having
- a head (6) with a head contact surface (8)
- and a pin (7) extending away from the head (6) along a longitudinal axis,
- wherein the pin (7) has a fitting end with a contact surface (9) that opposes the head contact surface (8),
**characterised by** a first flat washer (4) and a second flat washer (5), wherein
- the first flat washer (4) has a suitably sized opening (10) for allowing the pin (7) to pass through the opening (10), and the first flat washer (4) has a wedge-shaped part section (11),
- the second flat washer (5) has a suitably sized opening (13) for allowing the pin (7) to pass through the opening (13) and for allowing a rotation of the second flat washer relative to the fitting (3) around the longitudinal axis of the pin (7),
wherein the second flat washer (5) is in contact with the wedge-shaped part section (11) and moves along the surface of the wedge-shaped part section (11) when the second flat washer (5) and the fitting (3) rotate relative to each other around the longitudinal axis of the pin (7).

2. Fitting device (1) according to claim 1, **characterised in that** the second flat washer (5) has a wedge-shaped part section and the wedge-shaped part section of the second flat washer (5) is in contact with the wedge-shaped part section (11) of the first flat washer (4).

3. Fitting device (1) according to claim 1 or 2, **characterised in that** the head contact surface (8) is in contact with the second flat washer (5).

4. Fitting device (1) according to one of the claims 1 to 3, **characterised in that** the second flat washer (5) has a recess (14) and **in that** the head (6) of the fitting (3) is arranged at least in part in the recess (14).

5. Fitting device (1) according to one of the claims 1 to 4, **characterised in that** the second flat washer (5) has a hexagonal circumference.

6. Fitting device (1) with a fitting (3), which has
- a head (6) with a head contact surface (8)
- and a pin (7) extending away from the head (6) along a longitudinal axis,
- wherein the pin (7) has a fitting end with a contact surface (9) that opposes the head contact surface (8),
**characterised by** a flat washer (5a), wherein
- the flat washer (5a) has a suitably sized opening for allowing the pin (7) to pass through the opening and for allowing a rotation of the flat washer (5a) relative to the fitting (3) around the longitudinal axis of the pin (7),
- the flat washer (5a) has a wedge-shaped part section (11),
wherein the head contact surface (8) is in contact with the wedge-shaped part section (11) and moves along the surface of the wedge-shaped part section (11) when the flat washer (5a) and the fitting (3) rotate relative to each other around the longitudinal axis of the pin (7).

7. Fitting device (1) according to claim 6, **characterised in that** the head contact surface (8) has a wedge-shaped part section (11) and the wedge-shaped part section (11) of the head contact surface (8) is in contact with the wedge-shaped part section (11) of the flat washer (5a).

8. Fitting device (1) according to one of the claims 1 to 7, **characterised in that** the flat washer, or with several adjacently arranged flat washers the flat washer arranged furthest away from the head, has at least one protrusion (12), which prevents that the flat washer rotates relative to a planar surface in a rotation direction.

9. Fitting device (1) according to one of the claims 1 to 8, **characterised in that** the wedge-shaped part section (11) extends across a ring segment, wherein the wedge thickness increases in circumference direction.

10. Fitting device (1) according to one of the claims 1 to 9, **characterised in that** the, or in the case of several adjacently arranged flat washers the flat washer arranged nearest to the head is in contact with the head contact surface (8) and has protrusions (15) that engage the recesses (16) in the head contact surface (8) for preventing the rotation of the head (6) relative to the flat washer and/or **in that** the, or in the case of several adjacently arranged flat washers the flat washer arranged nearest to the head, is in contact with the head contact surface (8) and has recesses which are engaged by the protrusions in the head contact surface (8) for preventing the rotation of the head (6) relative to the flat washer.

11. Fitting device (1) according to one of the claims 1 to 5, or one of the claims 8 to 10 where claims 8 to 10 depend on one of the claims 1 to 5, **characterised in that** the pin (7) of the fitting (3) has a square cross-section and **in that** the opening (10) in the first flat washer (4) has a square cross-section, which prevents that the first flat washer (4) rotates relative to the pin (7).

12. Fitting device (1) according to one of the claims 1 to 11, **characterised in that** the contact surface (9) is formed on a sprung element, wherein the spring force of the element pre-tensions the element away from the longitudinal axis of the pin (7).

13. Use of the fitting device (1) according to claim 1 to 12 for fitting two elements, wherein both elements are arranged between the (first) flat washer and the contact surface (9).

14. Use of the fitting device (1) according to claim 13, **characterised in that** the pin (7) of the fitting (3) has a square cross-section and **in that** at least one of the two elements has an opening, through which the pin can pass, and **in that** the opening has a square cross-section that prevents that the pin rotates relative to the element with the opening.

## Revendications

1. Dispositif de fixation (1) avec une attache (3) qui présente
- une tête (6) avec une surface de contact de la tête (8)
- et une tige (7) qui s'étend de la tête (6) selon un axe longitudinal,
- la tige (7) présentant une extrémité de fixation avec une surface de contact (9) qui fait face à la surface de contact de la tête (8),
**caractérisé par** une première rondelle (4) et une deuxième rondelle (5),
- la première rondelle (4) présentant une grande ouverture (10) adaptée afin de laisser passer la tige (7) à travers l'ouverture (10), et la première rondelle (4) présentant une partie cunéiforme (11)
- la deuxième rondelle (5) présentant une grande ouverture (13) adaptée afin de laisser passer la tige (7) à travers l'ouverture (13) et de permettre à la deuxième rondelle de pivoter par rapport à l'attache (3) autour de l'axe longitudinal de la tige (7),
la deuxième rondelle (5) étant en contact avec la partie cunéiforme (11) et se déplaçant le long de la surface de la partie cunéiforme (11) lorsque la deuxième rondelle (5) et l'attache (3) pivotent par rapport l'une à l'autre autour de l'axe longitudinal de la tige (7).

2. Dispositif de fixation (1) selon la revendication 1, **caractérisé en ce que** la deuxième rondelle (5) présente une partie cunéiforme et que la partie cunéiforme de la deuxième rondelle (5) est en contact avec la partie cunéiforme (11) de la première rondelle (4).

3. Dispositif de fixation (1) selon la revendication 1 ou 2, **caractérisé en ce que** la surface de contact de la tête (8) est en contact avec la deuxième rondelle (5).

4. Dispositif de fixation (1) selon l'une quelconque des revendications 1 à 3, **caractérisé en ce que** la deuxième rondelle (5) présente un évidement (14) et que la tête (6) de l'attache (3) est disposée au moins partiellement dans l'évidement (14).

5. Dispositif de fixation (1) selon l'une quelconque des revendications 1 à 4, **caractérisé en ce que** la deuxième rondelle (5) présente une circonférence hexagonale.

6. Dispositif de fixation (1) avec une attache (3) qui présente
- une tête (6) avec une surface de contact de la tête (8)
- et une tige (7) qui s'étend de la tête (6) selon un axe longitudinal,
- la tige (7) présentant une extrémité de fixation avec une surface de contact (9) qui fait face à la surface de contact de la tête (8),
**caractérisé par** une rondelle (5a),
- la rondelle (5a) présentant une grande ouverture adaptée afin de laisser passer la tige (7) à travers l'ouverture, et de permettre à la rondelle (5a) de pivoter par rapport à l'attache (3) autour de l'axe longitudinal de la tige (7),
- la rondelle (5a) présente une partie cunéiforme (11),
la surface de contact de la tête (8) étant en contact avec la partie cunéiforme (11) et se déplaçant le long de la surface de la partie cunéiforme (11) lorsque la rondelle (5a) et l'attache (3) pivotent par rapport l'une à l'autre autour de l'axe longitudinal de la tige (7).

7. Dispositif de fixation (1) selon la revendication 6, **caractérisé en ce que** la surface de contact de la tête (8) présente une partie cunéiforme (11) et que la partie cunéiforme (11) de la surface de contact de la tête (8) est en contact avec la partie cunéiforme (11) de la rondelle (5a).

8. Dispositif de fixation (1) selon l'une quelconque des revendications 1 à 7, **caractérisé en ce que** la rondelle, ou la rondelle disposée la plus éloignée de la tête lors de plusieurs rondelles disposées les unes à côté des autres, présente au moins une saillie (12) qui empêche que la rondelle pivote dans un sens de rotation par rapport à une surface plane.

9. Dispositif de fixation (1) selon l'une quelconque des revendications 1 à 8, **caractérisé en ce que** la partie cunéiforme (11) s'étend sur un segment d'anneau, l'épaisseur de clavette augmentant dans le sens de la circonférence.

10. Dispositif de fixation (1) selon l'une quelconque des revendications 1 à 9, **caractérisé en ce que** la rondelle, ou la rondelle disposée la plus près de la tête lors de plusieurs rondelles disposées les unes à côté des autres, est en contact avec la surface de contact de la tête (8) et présente des saillies (15) qui s'engagent dans des évidements (16) dans la surface de contact de la tête (8) afin d'empêcher que la tête (6) pivote par rapport à la rondelle et/ou que la rondelle, ou la rondelle disposée la plus près de la tête lors de plusieurs rondelles disposées les unes à côté des autres, est en contact avec la surface de contact de la tête (8) et présente des évidements dans lesquels des saillies s'engagent dans la surface de contact de la tête (8) afin d'empêcher que la tête (6) pivote par rapport à la rondelle.

11. Dispositif de fixation (1) selon l'une quelconque des revendications 1 à 5 ou selon l'une quelconque des revendications 8 à 10, si tant est que les revendications 8 à 10 dépendent d'une des revendications 1 à 5, **caractérisé en ce que** la tige (7) de l'attache (3) présente une section transversale carrée et que l'ouverture (10) présente une section transversale carrée dans la première rondelle (4), ladite section transversale carrée empêche que la première rondelle (4) pivote par rapport à la tige (7).

12. Dispositif de fixation (1) selon l'une quelconque des revendications 1 à 11, **caractérisé en ce que** la surface de contact (9) est formée sur un élément à ressorts, la force de ressort sollicitant l'élément en l'éloignant de l'axe longitudinal de la tige (7).

13. Utilisation du dispositif de fixation (1) selon les revendications 1 à 12 pour fixer deux éléments, les deux éléments étant disposés entre la (première) rondelle et la surface de contact (9).

14. Utilisation du dispositif de fixation (1) selon la revendication 13, **caractérisée en ce que** la tige (7) de l'attache (3) présente une section transversale carrée et qu'au moins un des deux éléments présente une ouverture à travers laquelle la tige peut passer, et que l'ouverture présente une section transversale carrée qui empêche que la tige pivote avec l'ouverture par rapport à l'élément.
